Europäisches Patentamt

European Patent Office

Office européen des brevets

(19)

(11) Veröffentlichungsnummer: **0 125 590**
**A2**

(12) # EUROPÄISCHE PATENTANMELDUNG

(21) Anmeldenummer: **84105101.4**

(22) Anmeldetag: **05.05.84**

(51) Int. Cl.³: **C 08 F 297/08**

(30) Priorität: **13.05.83 DE 3317353**

(43) Veröffentlichungstag der Anmeldung:
**21.11.84 Patentblatt 84/47**

(84) Benannte Vertragsstaaten:
**AT BE DE FR GB IT NL**

(71) Anmelder: **BASF Aktiengesellschaft**
**Carl-Bosch-Strasse 38**
**D-6700 Ludwigshafen(DE)**

(72) Erfinder: **Gruber, Wolfgang, Dr.**
**Lorscher Ring 2 b**
**D-6710 Frankenthal(DE)**

(72) Erfinder: **Rümpler, Klaus-Dieter, Dr.**
**Erlenweg 4**
**D-6706 Wachenheim(DE)**

(54) Verfahren zum Herstellen von Propylen-Ethylen-Polymerisaten vom Typ der sogenannten "Block-Copolymerisate".

(57) Rahmen ist das Herstellen von Propylen-Ethylen-Block-Copolymerisaten, wobei man aus der Gasphase heraus zunächst (I) in einer ersten Polymerisationszone Propylen homopolymerisiert und (II) in einer zweiten Polymerisationszone ein Gemisch aus Propylen und Ethylen dem Propylen-Homopolymerisat hinzupolymerisiert. Charakteristikum ist, daß (a) in (I) bei einem bestimmten Gesamtdruck, einer bestimmten Temperatur sowie einem bestimmten Verhältnis Propylen-Partialdruck: Wasserstoff-Partialdruck (P/H-I) mit hoher Raum-Zeit-Ausbeute gearbeitet wird, (b) in (II) bei einem bestimmten Gesamtdruck sowie einer bestimmten Temperatur gearbeitet wird, wobei die Verhältnisse Propylen-Partialdruck: Ethylen-Partialdruck und Propylen-Partialdruck: Wasserstoff-Partialdruck (P/H-II) spezifische Werte haben, (c) der Gesamtdruck in (I) höher gehalten wird als in (II), (d) die Temperatur in (II) niedriger gewählt wird als die in (I), und (e) das Verhältnis P/H-I : P/H-II einen spezifischen Wert hat. Ergebnis sind Polymerisate mit verbesserten physikalischen Eigenschaften.

EP 0 125 590 A2

Verfahren zum Herstellen von Propylen-Ethylen-Polymerisaten vom Typ der sogenannten "Block-Copolymerisate"

Die vorliegende Erfindung betrifft ein Verfahren zum Herstellen von Propylen-Ethylen-Polymerisaten vom Typ der sogenannten "Block-Copolymerisate", wobei man jeweils in Anwesenheit von Wasserstoff als Molekulargewichtsregler in einem bewegten Festbett aus kleinteiligem Polymerisat bei Abwesenheit eines flüssigen Reaktionsmediums aus der Gasphase heraus zunächst

(I) in einer ersten Polymerisationszone Propylen durch Zufuhr eines Ziegler-Natta-Katalysatorsystems aus

    (1) einer Titan-III-Komponente,

    (2) einer Dialkylaluminiumchlorid-Komponente sowie

    (3) - gegebenenfalls - einer weiteren Katalysator-Komponente

homopolymerisiert und dann

(II) in einer zweiten Polymerisationszone ein Gemisch aus Propylen und Ethylen durch Zufuhr des in der ersten Polymerisationszone erhaltenen Reaktionsguts dem darin vorliegenden Propylen-Homopolymerisat hinzupolymerisiert,

mit den Maßgaben, daß (i) das Atomverhältnis Titan aus der Titan-III-Komponente (1) : Aluminium aus der Dialkylaluminiumchlorid-Komponente (2) im Bereich von 1:1 bis 1:20, insbesondere 1:2 bis 1:15 liegt, und (ii) das Verhältnis Gewicht des in der ersten Polymerisationszone in Polymerisat umgesetztes Propylen : Gewicht des in der 2. Polymerisationszone in Polymerisat umgesetztes Gemisch aus Propylen und Ethylen 100:10 bis 100:40, insbesondere 100:10 bis 100:30 beträgt.

Verfahren dieser Gattung - d.h. insbesondere Verfahren, für die es essentiell ist, in einem bewegten Bett aus kleinteiligem Polymerisat bei Abwesenheit eines flüssigen Reaktionsmediums zu arbeiten - sind bekannt und haben sich in der industriellen Praxis eingeführt. Ihre Entwicklung spiegelt sich wider in den Verfahren, wie sie zunächst aus der GB-PS 837 301, dann der GB-PS 1 006 469 und schließlich der GB-PS 1 032 945 bekannt geworden sind, - wobei es sich als günstig herausgestellt hat, jede der Stufen (I) und (II) des Verfahrens aus der letztgenannten Patentschrift so auszugestalten wie die Einzelstufe des aus der GB-PS 1 354 020 bekanntgewordenen Verfahrens.

HWz/HB

Die bekannten Verfahren der in Rede stehenden Gattung haben sich, übers Ganze gesehen, in der Technik bewährt; - was indessen nicht ausschließt, daß sie noch den einen oder anderen Wunsch offenlassen. So ist z.B. bislang das erstrebenswerte Ziel nicht zu erreichen gewesen, Polymerisate zu gewinnen, die nicht nur wünschenswert hohe G-Module, d.h. eine wünschenswert große Steifigkeit, aufweisen, sondern auch einerseits eine hohe Schlagzähigkeit, insbesondere eine hohe Schlagzähigkeit in der Kälte, und andererseits zugleich eine hohe Erweichungstemperatur, eine hohe Oberflächenhärte sowie eine gute Rieselfähigkeit haben: Arbeitet man so, daß die Schlagzähigkeit hoch wird, so fallen - insbesondere in der zweiten Polymerisationszone - Polymerisate an, deren Erweichungstemperatur und Oberflächenhärte sowie auch Rieselfähigkeit unbefriedigend sind.

Hier setzt die Aufgabe an, die zur vorliegenden Erfindung geführt hat: Das eingangs definierte Verfahren so auszugestalten, d.h. so zu verbessern, daß es mit dem vorerwähnten Nachteil nicht mehr oder nur noch in erheblich vermindertem Maße belastet ist.

Es wurde gefunden, daß die gestellte Aufgabe gelöst werden kann, wenn man (i) einerseits in der ersten sowie in der zweiten Polymerisationszone jeweils bei bestimmten Gesamtdrücken, bestimmten Temperaturen sowie spezifischen Relationen der Partialdrücke der Reaktanten arbeitet, (ii) andererseits zugleich jeweils zwischen der ersten und der zweiten Polymerisationszone bestimmte Differenzen im Gesamtdruck und in der Temperatur einstellt sowie die Relationen der Partialdrücke in den verschiedenen Zonen ihrerseits in eine spezifische Relation zueinander setzt, und (iii) - zur Erzielung der gewünschten hohen G-Module - das Polymerisationsverfahren möglichst "schnell", d.h. mit hohen Raum-Zeit-Ausbeuten, betreibt.

Gegenstand der Erfindung ist dementsprechend ein Verfahren zum Herstellen von Propylen-Ethylen-Polymerisaten vom Typ der sogenannten "Block-Copolymerisate", wobei man jeweils in Anwesenheit von Wasserstoff als Molekulargewichtsregler in einem bewegten Festbett aus kleinteiligem Polymerisat (worunter man in der Fachsprache bekanntlich versteht ein Schüttgutbett aus kleinteiligem Polymerisat, welches durch Rühren in Bewegung gehalten wird) bei Abwesenheit eines flüssigen Reaktionsmediums aus der Gasphase heraus zunächst

(I)    in einer ersten Polymerisationszone Propylen durch Zufuhr eines Ziegler-Natta-Katalysatorsystems aus

**0125590**

(1)  einer Titan-III-Komponente,

(2)  einer Dialkylaluminiumchlorid-Komponente sowie

(3)  - gegebenenfalls - einer weiteren Katalysator-Komponente

homopolymerisiert und dann

(II)  in einer zweiten Polymerisationszone ein Gemisch aus Propylen und Ethylen durch Zufuhr des in der ersten Polymerisationszone erhaltenen Reaktionsguts dem darin vorliegenden Propylen-Homopolymerisat hinzupolymerisiert,

mit den Maßgaben, daß (i) das Atomverhältnis Titan aus der Titan-III-Komponente (1) : Aluminium aus der Dialkylaluminiumchlorid-Komponente (2) im Bereich von 1:1 bis 1:20, insbesondere 1:2 bis 1:15 liegt, und (ii) das Verhältnis Gewicht des in der ersten Polymerisationszone in Polymerisat umgesetztes Propylen : Gewicht des in der 2. Polymerisationszone in Polymerisat umgesetztes Gemisch aus Propylen und Ethylen 100:10 bis 100:40, insbesondere 100:10 bis 100:30 beträgt.

Das erfindungsgemäße Verfahren ist dadurch gekennzeichnet, daß

(a)  in der ersten Polymerisationszone bei einem Gesamtdruck von 23 bis 40, vorzugsweise 24 bis 33 bar sowie einer Temperatur von 60 bis 80, vorzugsweise 70 bis 75°C gearbeitet wird, mit den Maßgaben, daß (i) das Verhältnis Propylen-Partialdruck : Wasserstoff-Partialdruck (P/H-I) 100:0,1 bis 100:15, vorzugsweise 100:0,5 bis 10 beträgt, und (ii) die Menge des Ziegler-Natta-Katalysatorsystems so gewählt wird, daß eine Raum-Zeit-Ausbeute an Propylen-Homopolymerisat von 2,3 bis 4,5, insbesondere von 2,4 bis 3,5 $to/m^3$. Tag gegeben ist,

(b)  in der zweiten Polymerisationszone bei einem Gesamtdruck zwischen 13 und 17, vorzugsweise zwischen 14 und 16 bar sowie einer Temperatur zwischen 52 und 59, vorzugsweise zwischen 54 und 56°C gearbeitet wird, mit den Maßgaben, daß (i) das Verhältnis Propylen-Partialdruck : Ethylen-Partialdruck 100:35 bis 100:60, vorzugsweise 100:35 bis 100:50 und (ii) das Verhätnis Propylen-Partialdruck : Wasserstoff-Partialdruck (P/H-II) 100:70 bis 100:140, vorzugsweise 100:90 bis 100:130 beträgt,

(c)  der Gesamtdruck in der ersten Polymerisationszone um wenigstens 10 bar höher gehalten wird als der Gesamtdruck in der zweiten Polymerisationszone,

(d)    die Temperatur in der zweiten Polymerisationszone um wenigstens 10, vorzugsweise wenigstens 15°C niedriger gewählt wird als die Temperatur in der ersten Polymerisationszone, und

(e)    das Verhältnis Propylen-Partialdruck : Wasserstoff-Partialdruck in der ersten Polymerisationszone (P/H-I) zu dem Verhältnis Propylen-Partialdruck : Wasserstoff-Partialdruck in der zweiten Polymerisationszone (P/H-II) so eingestellt wird, daß die Relation P/H-I : P/H-II einen Wert von 4,5 bis 1400, vorzugsweise von 9 bis 260 hat.

Zu dem erfindungsgemäßen Verfahren ist im einzelnen das folgende zu bemerken:

Das Polymerisationsverfahren als solches kann - unter Beachtung der kennzeichnenden Besonderheiten - in praktisch allen einschlägig üblichen technologischen Ausgestaltungen durchgeführt werden, etwa als diskontinuierliches, taktweises oder kontinuierliches Verfahren. Die erwähnten technologischen Ausgestaltungen - mit anderen Worten: die technologischen Varianten der Gasphasen-Block-Copolymerisation von Propylen/Ethylen in zwei Polymerisationszonen nach Ziegler-Natta - sind, wie eingangs dargelegt, aus der Literatur und Praxis wohlbekannt, so daß sich nähere Ausführungen zu ihnen erübrigen.

Der Vollständigkeit halber ist allenfalls zu erwähnen, daß beim erfindungsgemäßen Verfahren die Komponenten des Katalysatorsystems in mannigfacher Weise in die erste Polymerisationszone eingebracht werden können, z.B. (i) die Titan-III-Komponente (1), die Dialkylaluminiumchlorid-Komponente (2) sowie - gegebenenfalls - die weitere Katalysatorkomponente (3) alle örtlich gemeinsam, (ii) die gleichen Komponenten alle örtlich getrennt voneinander, (iii) die Komponente (1) einerseits und ein Gemisch aus den Komponenten (2) und (3) andererseits örtlich getrennt voneinander - was von besonderem Vorteil sein kann -, oder (iiii) ein Gemisch aus den Komponenten (1) und (3) einerseits und die Komponente (2) andererseits örtlich getrennt voneinander.

Es versteht sich ferner von selbst, daß bei dem neuen Verfahren mit sinkenden Werten des Verhältnisses Propylen-Partialdruck : Wasserstoff-Partialdruck (P/H-I) in der ersten Polymerisationsstufe im Endergebnis Polymerisate mit steigenden Werten des Schmelzindex' erhalten werden; - et vice versa. Wie sich ferner gezeigt hat, bedingen - in der ersten und/ oder zweiten Polymerisationszone - steigende Werte des Propylen : Wasserstoff Partialdruck-Verhältnisses eine Verringerung der Kleinstkornanteile im Polymerisat.

Was die stoffliche Seite der beim erfindungsgemäßen Verfahren einzusetzenden Katalysatorsysteme betrifft, ist im einzelnen das folgende zu sagen:

Zur Titan-III-Komponente (1):

Hier kommen die einschlägig üblichen in Betracht, wobei sich u.a. die folgenden — zur Verwendung im erfindungsgemäßen Verfahren besonders geeigneten — zwei Gruppen hervorheben:

(1a) Titantrichloride als solche und Titantrichlorid-Cokristallisate mit Metallhalogeniden, insbesondere Aluminiumchlorid etwa der Formel $TiCl_3 \cdot \frac{1}{3} AlCl_3$. Siehe hierzu z.B. die US-PS 3 128 252 und 3 814 743.

Wie sich gezeigt hat, ist aus dieser Gruppe für den erfindungsgemäßen Zweck besonders gut geeignet ein sehr feinteiliges Cokristallisat der Formel $TiCl_3 \cdot \frac{1}{3} AlCl_3$.

(1b) Mit Elektronendonatoren bzw. Lewis-Basen modifizierte Titantrichloride bzw. Titantrichlorid-Cokristallisate der unter (1a) bezeichneten Art. Derartige modifizierte Titantrichlorid-Katalysatorkomponenten gibt es in zahlreichen Varianten, da sie bekanntlich eine Reihe von Vorteilen mit sich bringen. Um unnötige Wiederholungen zu vermeiden sei im gegebenen Zusammenhang schlaglichtartig beispielsweise verwiesen auf die GB-PS 851 113.

Für den erfindungsgemäßen Zweck ist diese Gruppe am besten geeignet, namentlich sehr feinteilige Cokristallisate der Formel $TiCl_3 \cdot \frac{1}{3} AlCl_3$, welche mit den folgenden Donatoren bzw. Basen modifiziert sind:

Ethern, wie dem Di-n-butylether und dem Diisopentylether, Estern, wie den Benzoesäure-$C_1$- bis $C_5$-Alkylestern und dem Phenylessigsäureethylester; Phosphinen, wie dem Tributylphosphin; Phosphinoxiden, wie dem Triphenylphosphinoxid; sowie Säureamiden.

Die Art und Weise der Modifizierung im einzelnen können die einschlägig üblichen sein, wobei z.B. hervorzuheben sind die für den erfindungsgemäßen Zweck besonders geeigneten Modifizierungen gemäß den GB-PS 1 447 706, 1 485 181 und 1 512 730 sowie den US-PS 4 120 823, 4 154 699, 4 154 700 und 4 229 318.

Zur Dialkylaluminiumchlorid-Komponente (2):

Als Dialkylaluminiumchlorid-Komponente kommen ebenfalls die einschlägig üblichen in Betracht; sie sind aus Literatur und Praxis so wohlbekannt, daß auf sie nicht näher eingegangen zu werden braucht. Als herausragender Vertreter sei beispielsweise genannt das Diethylaluminiumchlorid.

Zu den - gegebenenfalls mitzuverwendenden - weiteren Katalysator-Komponenten (3):

Auch hier kommen wiederum die einschlägig üblichen - in den üblichen Mengen - in Betracht; sie sind ebenfalls aus Literatur und Praxis so wohlbekannt, daß auf sie nicht näher eingegangen zu werden braucht.

Hervorzuheben ist jedoch, daß für den erfindungsgemäßen Zweck als weitere Katalysator-Komponente (3) mit ganz besonderem Erfolg gewisse phenolische Stoffe eingesetzt werden können. Es handelt sich dabei - sowohl qualitativ als auch quantitativ - um die gleichen phenolischen Stoffe wie sie im Rahmen der US-PS 4 260 710 beschrieben sind. Anstelle unnötiger Wiederholungen wird daher diese Patentschrift insoweit zu einem Bestandteil der Offenbarung der vorliegenden Erfindung gemacht.

Insgesamt läßt sich sagen, daß die stoffliche Seite des erfindungsgemäßen Verfahrens als solche im Rahmen des einschlägig üblichen liegt.

Beispiel

In einer einschlägig üblichen Vorrichtung (einer sogenannten "Kaskade"; vgl. dazu die GB-PS 1 032 945) wurde kontinuierlich ein Propylen-Ethylen- -Polymerisat vom Typ der sogenannten "Block-Copolymerisate" hergestellt, indem man jeweils in einem bewegten Festbett (einem gerührten konzentrischen Festbett) aus kleinteiligem Polymerisat und in Abwesenheit eines flüssigen Reaktionsmediums aus der Gasphase heraus zunächst

(I)     in einer ersten Polymerisationszone mit einem Nutzvolumen von 180 l
        Propylen durch kontinuierliche, getrennt dosierte Zufuhr eines Ziegler-Natta-Katalysatorsystems aus

        (1)     einer gemäß Beispiel 2 der GB-PS 1 485 181 hergestellten Titan-
                -III-Komponente (Menge 30 mmol/h, gerechnet als Titan),

        (2)     Diethylaluminiumchlorid sowie

        (3)     n-Octadecyl-ß-(4'-oxy-3',5'-di-tert.-butylphenyl)-propionat homopolymerisierte und dann

(II)   in einer zweiten Polymerisationszone mit einem Nutzvolumen von 180 l
ein Gemisch aus Propylen und Ethylen durch Zufuhr des in der ersten
Polymerisationszone erhaltenen Reaktionsguts dem darin vorliegenden
Propylen-Homopolymerisat hinzupolymerisierte,

mit den Maßgaben, daß (i) das Atomverhältnis Titan aus der Titan-III-Komponente (1) : Aluminium aus der Dialkylaluminiumchlorid-Komponente (2)
1:7 und das Molverhältnis Titan aus der Titan-III-Komponente (1) : weiterer Katalysatorkomponente (3) - d.h. dem n-Octadecyl-ß-(4'-oxy-3',5'-di-
-tert.-butylphenyl)-propionat - 1:0,3 betrug, und (ii) das Verhältnis
Gewicht des in der ersten Polymerisationszone in Polymerisat umgesetztes
Propylen : Gewicht des in der 2. Polymerisationszone in Polymerisat umgesetztes Gemisch aus Propylen und Ethylen 100:16 betrug.

Das Verfahren wurde erfindungsgemäß im einzelnen so durchgeführt, daß

(a)   in der ersten Polymerisationszone bei einem Gesamtdruck von 28 bar
sowie einer Temperatur von 70°C gearbeitet wurde, mit den Maßgaben,
daß (i) das Verhältnis Propylen-Partialdruck : Wasserstoff-Partialdruck (P/H-I) 100:1 betrug, und (ii) die Menge des Ziegler-Natta-Katalysatorsystems (siehe oben) so gewählt wurde, daß eine Raum-Zeit-
-Ausbeute an Propylen-Homopolymerisat von 2,65 t/m$^3$.Tag gegeben war,

(b)   in der zweiten Polymerisationszone bei einem Gesamtdruck von 15 bar
sowie einer Temperatur von 55°C gearbeitet wurde, mit den Maßgaben,
daß (i) das Verhältnis Propylen-Partialdruck : Ethylen-Partialdruck
100:38,5 und (ii) das Verhältnis Propylen-Partialdruck : Wasserstoff-
-Partialdruck (P/H-II) 100:115 betrug.

(c)   der Gesamtdruck in der ersten Polymerisationszone also um 13 bar
höher gehalten wurde als der Gesamtdruck in der zweiten Polymerisationszone,

(d)   die Temperatur in der zweiten Polymerisationszone um 15°C niedriger
gewählt wurde als die Temperatur in der ersten Polymerisationszone,
und

(e)   das Verhältnis Propylen-Partialdruck : Wasserstoff-Partialdruck in
der ersten Polymerisationszone (P/H-I) zu dem Verhältnis Propylen-
-Partialdruck : Wasserstoff-Partialdruck in der zweiten Polymerisationszone (P/H-II) so eingestellt wurde, daß die Relation P/H-I:P/H-II einen Wert von 115 hatte.

Auf diese Weise wurden 25,5 kg/h Polymerisat mit dem Schmelzindex (gemessen bei 230°C nach DIN 53 735) von 3,4 g/10 min erhalten; es wies eine hohe Steifigkeit, gute Schlagzähigkeit, hohe Erweichungstemperatur, gute Oberflächenhärte sowie auch gute morphologische Eigenschaften, insbesondere auch eine gute Rieselfähigkeit auf.

1.12.83

Patentanspruch

Verfahren zum Herstellen von Propylen-Ethylen-Polymerisaten vom Typ der sogenannten "Block-Copolymerisate", wobei man jeweils in Anwesenheit von Wasserstoff als Molekulargewichtsregler in einem bewegten Festbett aus kleinteiligem Polymerisat bei Abwesenheit eines flüssigen Reaktionsmediums aus der Gasphase heraus zunächst

(I)    in einer ersten Polymerisationszone Propylen durch Zufuhr eines Ziegler-Natta-Katalysatorsystems aus

(1)    einer Titan-III-Komponente,
(2)    einer Dialkylaluminiumchlorid-Komponente sowie
(3)    - gegebenenfalls - einer weiteren Katalysator-Komponente

homopolymerisiert und dann

(II)    in einer zweiten Polymerisationszone ein Gemisch aus Propylen und Ethylen durch Zufuhr des in der ersten Polymerisationszone erhaltenen Reaktionsguts dem darin vorliegenden Propylen-Homopolymerisat hinzupolymerisiert,

mit den Maßgaben, daß (i) das Atomverhältnis Titan aus der Titan-III-Komponente (1) : Aluminium aus der Dialkylaluminiumchlorid-Komponente (2) im Bereich von 1:1 bis 1:20 liegt, und (ii) das Verhältnis Gewicht des in der ersten Polymerisationszone in Polymerisat umgesetztes Propylen : Gewicht des in der 2. Polymerisationszone in Polymerisat umgesetztes Gemisch aus Propylen und Ethylen 100:10 bis 100:40 beträgt, dadurch gekennzeichnet, daß

(a)    in der ersten Polymerisationszone bei einem Gesamtdruck von 23 bis 40 bar sowie einer Temperatur von 60 bis 80°C gearbeitet wird, mit den Maßgaben, daß (i) das Verhältnis Propylen-Partialdruck : Wasserstoff-Partialdruck (P/H-I) 100:0,1 bis 100:15 beträgt, und (ii) die Menge des Ziegler-Natta-Katalysatorsystems so gewählt wird, daß eine Raum-Zeit-Ausbeute an Propylen-Homopolymerisat von 2,3 bis 4,5 to/m$^3$.Tag gegeben ist,

(b)    in der zweiten Polymerisationszone bei einem Gesamtdruck zwischen 13 und 17 bar sowie einer Temperatur zwischen 52 und 59°C gearbeitet wird, mit den Maßgaben, daß (i) das Verhältnis Propylen-Partialdruck : Ethylen-Partialdruck 100:35 bis 100:60 und (ii) das Verhält-

**0125590**

nis Propylen-Partialdruck : Wasserstoff-Partialdruck (P/H-II) 100:70 bis 100:140 beträgt,

(c) der Gesamtdruck in der ersten Polymerisationszone um wenigstens 10 bar höher gehalten wird als der Gesamtdruck in der zweiten Polymerisationszone,

(d) die Temperatur in der zweiten Polymerisationszone um wenigstens 10°C niedriger gewählt wird als die Temperatur in der ersten Polymerisationszone, und

(e) das Verhältnis Propylen-Partialdruck : Wasserstoff-Partialdruck in der ersten Polymerisationszone (P/H-I) zu dem Verhältnis Propylen-Partialdruck : Wasserstoff-Partialdruck in der zweiten Polymerisationszone (P/H-II) so eingestellt wird, daß die Relation P/H-I : P/H-II einen Wert von 4,5 bis 1400 hat.

*Kur*
*1.12.83*